# EUROPEAN PATENT APPLICATION

(11) **EP 3 819 976 A1**
(43) Date of publication of application: **12.05.2021**
(21) Application number: 19932798.2
(22) Date of filing: 19.12.2019
(51) Int. Cl.: H01M 10/0567, H01M 10/052

(54) **LITHIUM SECONDARY BATTERY ELECTROLYTE FOR REDUCING INTERNAL RESISTANCE OF BATTERY AND LITHIUM SECONDARY BATTERY**

(30) Priority: 12.06.2019 CN 201910503727
(71) Applicant: Guangzhou Tinci Materials Technology Co., Ltd, Guangzhou, Guangdong 510700 (CN)
(72) Inventor: FAN, Weizhen, Guangzhou, Guangdong 510700 (CN); FAN, Chaojun, Guangzhou, Guangdong 510700 (CN); CAO, Gejin, Guangzhou, Guangdong 510700 (CN); YU, Le, Guangzhou, Guangdong 510700 (CN); ZHAO, Jingwei, Guangzhou, Guangdong 510700 (CN)
(74) Representative: Cabinet Laurent & Charras
(86) International application number: PCT/CN2019/126635
(87) International publication number: WO 2020/248565

(57) **Abstract**

A lithium secondary battery electrolyte for reducing internal resistance of a battery and a lithium secondary battery. The electrolyte comprises a non-aqueous organic solvent, a lithium salt and an additive. The additive comprises a sulfimide compound. The sulfimide compound can significantly reduce the internal resistance of a battery. The low temperature cycle, large rate normal temperature cycle, high temperature cycle, and expansion after high temperature storage have been significantly improved.

## Description

### TECHNICAL FIELD

The present disclosure relates to lithium secondary batteries, for example, an electrolyte for reducing internal resistance of a lithium secondary battery and a lithium secondary battery.

### BACKGROUND

Lithium secondary batteries have a broad prospect of being applied to consumer electronics, powered vehicle batteries, and energy storage power sources due to their characteristics of high energy density, long cycle life, and pollution-free property.

In recent years, with the depletion of global petroleum energy and the development of new energy technologies, a technology for lithium secondary batteries applied to automobile power has developed rapidly. Higher requirements are imposed on the performance of the lithium secondary batteries. For example, the batteries need prolonged service life, capability of use at extreme temperatures and of quick charging and discharging (at a high rate), and higher safety.

A battery pack for an electric vehicle is generally composed of multiple batteries connected in series or in parallel. Since the batteries generate a certain amount of heat during normal operation, the entire battery pack adopts a battery thermal management system to conduct thermal management on the batteries. A battery discharged at a higher rate or having greater internal resistance would generate more heat. Reducing the internal resistance of the battery allows less heat generated. Similarly, a battery charged and discharged at a higher rate would generate more heat. Reducing the internal resistance of the battery also allows the battery that is charged and discharged at a high rate to generate less heat.

The battery pack is composed of multiple batteries, and the consistency of individual batteries determines the service life of the entire battery pack. Therefore, reduced impedance of the battery allows substantially improved consistency of batteries and thus increased service life thereof.

In terms of safety, if a battery has too large internal resistance, the battery would see rapidly increasing voltage during charging, and be exposed to a risk of overcharging. Once overcharged, the battery may ignite or explode. To prevent the battery from being overcharged, most of the current solutions consist in adding an anti-overcharge additive to an electrolyte of the battery. Once the battery is overcharged, the anti-overcharge additive would polymerize so that the internal resistance of the battery is increased and an internal current though the battery is cut off, thereby preventing the battery from igniting and exploding. However, though the safety can be improved to a certain extent in a way that the anti-overcharge additive is added to the electrolyte, once the battery is overcharged, the damage to the battery is irreversible. It may be more favorable for service life and safety of the battery to contain overcharge at the source through fundamentally reduced impedance of the battery .

### SUMMARY

The following is a summary of the subject matter described herein in detail. This summary is not intended to limit the scope of the claims.

A first aspect of the present disclosure provides an electrolyte for a lithium secondary battery. The electrolyte includes a non-aqueous organic solvent, a lithium salt, and an additive, where the additive includes a sulfonimide compound.

As a preferred technical solution, the sulfonimide compound is selected from one or more compounds of Formula (1): 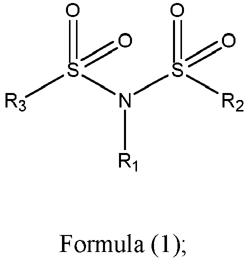 where R₁ is selected from one of fluorine, hydrogen, phenyl, fluorophenyl, pyridyl, hydrocarbyl, ether, fluorohydrocarbyl, phosphate, sulfonate, and silane.

As a preferred technical solution, R₁ is selected from one of methyl, ethyl, propyl, vinyl, and propenyl.

As a preferred technical solution, R₂ and R₃ are independently selected from one or more of CF₃, F, phenyl, and fluorophenyl.

As a preferred technical solution, R₂ and R₃ are identical.

As a preferred technical solution, the sulfonimide compound accounts for 0.1% to 5% of a total mass of the electrolyte.

As a preferred technical solution, the additive further includes a second additive that accounts for 0.01% to 10% of a total mass of the electrolyte.

As a preferred technical solution, the second additive is selected from one or more of vinylene carbonate, fluoroethylene carbonate, lithium difluorophosphate, lithium bis(oxalate)borate, lithium difluoro oxalate borate, 1,3-propane sultone, triallyl isocyanurate, methylene methanedisulfonate, vinyl sulfate, triallyl phosphate, and tripropynyl phosphate.

As a preferred technical solution, the non-aqueous organic solvent includes a cyclic ester and/or a chain ester and accounts for 67% to 91% of the total mass of the electrolyte.

As a preferred technical solution, the cyclic ester is selected from one or more of ethylene carbonate, propylene carbonate, 1,2-butanediol cyclic carbonate, 2,3-butanediol cyclic carbonate, γ-butyrolactone, and catechol carbonate.

As a preferred technical solution, the chain ester is selected from one or more of dimethyl carbonate, diethyl carbonate, carbonic acid diethyl ester, dipropyl carbonate, methyl ethyl carbonate, methyl propyl carbonate, ethyl propyl carbonate, methyl formate, ethyl formate, propyl formate, methyl acetate, ethyl acetate, propyl acetate, methyl propionate, ethyl propionate, propyl propionate, and 2,2-difluoroethyl acetate.

As a preferred technical solution, the lithium salt is selected from one or more of lithium hexafluorophosphate, lithium bis(fluorosulfonyl)imide, and lithium bis(trifluoromethanesulfonyl)imide.

As a preferred technical solution, the lithium salt accounts for 8% to 18% of a total mass of the electrolyte.

A second aspect of the present disclosure provides a lithium secondary battery, where an electrolyte for the lithium secondary battery is the electrolyte described above, and the lithium secondary battery is one of a lithium ion battery, a lithium sulfur battery, and a lithium air battery.

As a preferred technical solution, a cathode active material for the lithium secondary battery is a lithium-containing transition metal oxide and/or a lithium-containing transition metal phosphate compound.

As a preferred technical solution, the cathode active material is selected from at least one of Li₁₊ₐ(NiₓCo_{y}M_{1-x-y})O₂, Li(NiₙMnₘCo₂₋ₙ₋ₘ)O₄, and LiMₚ(PO₄)_{q}, where 0 ≤ a ≤ 0.3, 0 ≤ x ≤ 1, 0 ≤ y ≤ 1, 0 ≤ x + y ≤1, 0 ≤ n ≤ 2, 0 ≤ m ≤ 2, 0 ≤ n + m ≤ 2, M is Al, Fe, Ni, Co, Mn, or V, 0 < p < 5, and 0 < q < 5.

As a preferred technical solution, an anode active material for the lithium secondary battery is selected from at least one of lithium metal, lithium alloy, carbon material, and silicon or tin and an oxide thereof.

### DETAILED DESCRIPTION

Technical features in the technical solutions provided by the present disclosure are further described below clearly and completely in conjunction with specific embodiments. The embodiments described below are part, not all, of embodiments of the present disclosure. All other embodiments obtained by those of ordinary skill in the art without creative effort based on the embodiments of the present disclosure are within the scope of the present disclosure.

It is to be noted that as used herein, the relationship terms such as "first" and "second" are used merely to distinguish one component or operation from another component or operation and do not necessarily require or imply such an actual relationship or order between these components or operations. Furthermore, the term "comprising", "including", "containing", or any other variant thereof is intended to encompass a non-exclusive inclusion so that a process, method, or component that includes a series of elements not only includes the series of elements but may also include other elements that are not expressly listed or elements that are inherent to the process, method, or component.

The words such as "preferred", "preferably", and "more preferred" in the present disclosure refer to embodiments of the present disclosure that can provide certain beneficial effects in some cases. However, in the same case or another case, other embodiments may also be preferred. In addition, the description of one or more preferred embodiments does not imply that other embodiments are unusable and is not intended to exclude other embodiments from the scope of the present disclosure.

It should be understood that unless used in any operation example or otherwise indicated, all numbers indicating the amounts of components used in, for example, the description and the claims should be understood as being modified by the term "about" in all cases.

A first aspect of the present disclosure provides an electrolyte for a lithium secondary battery. The electrolyte includes a non-aqueous organic solvent, a lithium salt, and an additive, where the additive includes a sulfonimide compound.

### <Additive>

### 1-1. Sulfonimide Compound

The additive of the present disclosure includes the sulfonimide compound. Preferably, the sulfonimide compound is selected from one or more compounds of Formula (1):

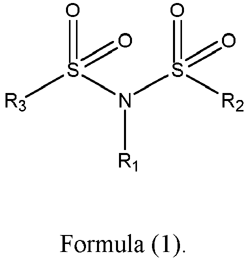

In the above Formula (1), R₂ and R₃ are independently selected from one or more of halogen, halogenated alkyl, aryl, and halogenated aryl.

Halogen or a halogenated group may be one or more of fluorine atom, chlorine atom, bromine atom, and iodine atom, preferably the fluorine atom and the chlorine atom, and further preferably the fluorine atom. The number of substitutions by halogen atoms is not particularly limited.

An alkyl group in the halogenated alkyl group is not particularly limited and may be chain alkyl or cycloalkyl.

Specific examples of chain alkyl include, but are not limited to, methyl, ethyl, n-propyl, 1-methylethyl, n-butyl, 1-methylpropyl, 2-methylpropyl, 1,1-dimethylethyl, n-pentyl, 1-methylbutyl, 1-ethylpropyl, 2-methylbutyl, 3-methylbutyl, 2,2-dimethylpropyl, 1,1-dimethylpropyl, 1,2-dimethylpropyl, n-hexyl, 1-methylpentyl, 1-ethylbutyl, 2-methylpentyl, 3-methylpentyl, 4-methylpentyl, 2-ethylbutyl, 2,2-dimethylbutyl, 2,3-dimethylbutyl, 3,3-dimethylbutyl, 1,1-dimethylbutyl, 1,2-dimethylbutyl, 1,1,2-trimethylpropyl, 1,2,2-trimethylpropyl, 1-ethyl-2-methylpropyl, 1-ethyl-1-methylpropyl, n-octyl, and n-decyl, etc. Among those, methyl, ethyl, n-propyl, and n-butyl, etc. are preferred.

Specific examples of cycloalkyl include, but are not limited to, cyclopentyl, 2-methylcyclopentyl, 3-methylcyclopentyl, 2,2-dimethylcyclopentyl, 2,3-dimethylcyclopentyl, 2,4-dimethylcyclopentyl, 2,5-dimethylcyclopentyl, 3,3-dimethylcyclopentyl, 3,4-dimethylcyclopentyl, 2-ethylcyclopentyl, 3-ethylcyclopentyl, cyclohexyl, 2-methylcyclohexyl, 3-methylcyclohexyl, 4-methylcyclohexyl, 2,2-dimethylcyclohexyl, 2,3 -dimethyl cyclohexyl, 2,4-dimethyl cyclohexyl, 2,5 -dimethyl cyclohexyl, 2,6-dimethylcyclohexyl, 3,4-dimethylcyclohexyl, 3,5-dimethylcyclohexyl, 2-ethylcyclohexyl, 3-ethylcyclohexyl, 4-ethylcyclohexyl, bicyclo[3,2,1]oct-1-yl, and bicyclo[3,2,1]oct-2-yl, etc. Among those, cyclopentyl, 2-methyl cyclopentyl, 3-methyl cyclopentyl, cyclohexyl, 2-methyl cyclohexyl, 3-methyl cyclohexyl, and 4-methyl cyclohexyl are preferred.

The halogenated alkyl group is preferably one or more of fluoromethyl, difluoromethyl, trifluoromethyl, 1-fluoroethyl, 2-fluoroethyl, 1,1-difluoroethyl, 1,2-difluoroethyl, 2,2-difluoroethyl, 1,1,2-trifluoroethyl, chloromethyl, dichloromethyl, trichloromethyl, 1-chloroethyl, 2-chloroethyl, 1,1-dichloroethyl, 1,2-dichloroethyl, 2,2-dichloroethyl, or 1,1,2-trichloroethyl. Further preferably, the halogenated alkyl group is trifluoromethyl (CF₃).

The aryl includes, but is not limited to, phenyl, 2-methylphenyl, 3-methylphenyl, 4-methylphenyl, and 2,3-dimethylphenyl, etc. Among those, phenyl is preferred. Aryl may also be arylalkyl which includes, but is not limited to, phenylmethyl, 1-phenylethyl, 2-phenylethyl, diphenylmethyl, and triphenylmethyl, etc. Among those, phenylmethyl and 2-phenylethyl are preferred.

The halogenated aryl includes, but is not limited to, aryl substituted with a halogen atom or arylalkyl substituted with a halogen atom. The halogen atom may be one or more of fluorine atom, chlorine atom, bromine atom, and iodine atom, preferably the fluorine atom and the chlorine atom, and further preferably the fluorine atom. The number of substitutions by halogen atoms is not particularly limited.

In some preferred embodiments, R₂ and R₃ are independently one or more of CF₃, F, phenyl, and fluorophenyl; preferably, R₂ and R₃ are identical.

In the above Formula (1), R₁ may be one of halogen atom, hydrogen, aryl, halogenated aryl, a nitrogen-containing heterocyclic group, hydrocarbyl, ether, halogenated hydrocarbyl, phosphate, sulfonate, and silane.

The halogen atom may be one or more of fluorine atom, chlorine atom, bromine atom, and iodine atom, preferably the fluorine atom and the chlorine atom, and further preferably the fluorine atom. The number of substitutions by halogen atoms is not particularly limited.

The aryl includes, but is not limited to, phenyl, 2-methylphenyl, 3-methylphenyl, 4-methylphenyl, and 2,3-dimethylphenyl, etc. Aryl may also be arylalkyl which includes, but is not limited to, phenylmethyl, 1-phenylethyl, 2-phenylethyl, diphenylmethyl, and triphenylmethyl, etc. Among those, phenylmethyl, 2-phenylethyl, and phenyl are preferred. Phenyl is further preferred. The following description for the specific structural formula thereof may be included:
The nitrogen-containing heterocyclic group includes, but is not limited to, pyrrolidinyl, morpholinyl, imidazolidinyl, tetrahydropyrrolidinyl, piperazinyl, piperidinyl, and pyridyl.

Specific examples of pyrrolidine may be listed as follows: N,N-dimethylpyrrolidine, N-ethyl-N-methylpyrrolidine, and N,N-diethylpyrrolidine, etc.

Specific examples of morpholine may be listed as follows: N,N-dimethylmorpholine, N-ethyl-N-methylmorpholine, and N,N-diethylmorpholine, etc.

Specific examples of imidazolidine may be listed as follows: N,N'-dimethylimidazolidine, N-ethyl-N'-methylimidazolidine, N,N'-diethylimidazolidine, and 1,2,3-trimethylimidazolidine, etc.

Specific examples of tetrahydropyrrolidine may be listed as follows: N,N'-dimethyltetrahydropyrrolidine, N-ethyl-N'-methyltetrahydropyrrolidine, N,N'-diethyltetrahydropyrrolidine, and 1,2,3-trimethyl tetrahydropyrrolidine, etc.

Specific examples of piperazine may be listed as follows: N,N,N',N'-tetramethylpiperazine, N-ethyl-N,N',N'-trimethylpiperazine, N,N-diethyl-N',N'-dimethylpiperazine, N,N,N'-triethyl-N'-methyl piperazine, and N,N,N',N'-tetraethylpiperazine, etc.

Specific examples of piperidine may be listed as follows: N,N-dimethylpiperidine, N-ethyl-N-methylpiperidine, and N,N-diethylpiperidine, etc.

Specific examples of pyridine may be listed as follows: N-methylpyridine, N-ethylpyridine, 1,2-dimethylpyridine, 1,3-dimethylpyridine, 1,4-dimethylpyridine, and 1-ethyl-2-methylpyridine, etc.

The nitrogen-containing heterocyclic group is preferably pyridyl and may have a specific structural formula described as follows:
The halogenated aryl includes, but is not limited to, aryl substituted with a halogen atom or arylalkyl substituted with a halogen atom. The halogen atom may be one or more of fluorine atom, chlorine atom, bromine atom, and iodine atom. The number of substitutions by halogen atoms is not particularly limited. Among those, the fluorine atom and the chlorine atom are preferred, and the fluorine atom is further preferred. Halogenated aryl is further preferably fluorophenyl and may have a specific structural formula described as follows:
The hydrocarbyl includes alkyl, alkenyl, or alkynyl.

Specific examples of alkyl may be listed as follows: methyl, ethyl, n-propyl, 1-methylethyl, n-butyl, 1-methylpropyl, 2-methylpropyl, 1,1-dimethyl ethyl, n-pentyl, 1-methylbutyl, 1-ethylpropyl, 2-methylbutyl, 3-methylbutyl, 2,2-dimethylpropyl, 1,1-dimethylpropyl, 1,2-dimethylpropyl, n-hexyl, 1-methylpentyl, 1-ethylbutyl, 2-methylpentyl, 3-methylpentyl, 4-methylpentyl, 2-ethylbutyl, 2,2-dimethylbutyl, 2,3-dimethylbutyl, 3,3-dimethylbutyl, 1,1-dimethylbutyl, 1,2-dimethylbutyl, 1,1,2-trimethylpropyl, 1,2,2-trimethylpropyl, 1-ethyl-2-methylpropyl, 1-ethyl-1-methylpropyl, n-octyl, and n-decyl, etc.; Among those, one of methyl, ethyl, and propyl is preferred.

Specific examples of alkenyl may be listed as follows: vinyl, propenyl, butenyl, pentenyl, hexenyl, 4-methyl-1-hexenyl, 2-ethyl-4-methyl-1-hexenyl, and 2-methylpropenyl, preferably vinyl or propenyl.

Specific examples of alkynyl may be ethynyl, propynyl, and butynyl, etc.

The halogenated hydrocarbyl includes, but is not limited to, halogenated alkyl and halogenated alkenyl.

Specific examples of halogenated alkyl may be listed as follows: alkyl substituted with a fluorine atom such as fluoromethyl, difluoromethyl, trifluoromethyl, 1-fluoroethyl, 2-fluoroethyl, 1,1-difluoroethyl, 1,2-difluoroethyl, 2,2-difluoroethyl, and 1,1,2-trifluoroethyl; alkyl substituted with a chlorine atom such as chloromethyl, dichloromethyl, trichloromethyl, 1-chloroethyl, 2-chloroethyl, 1,1-dichloroethyl, 1,2-dichloroethyl, 2,2-dichloroethyl, and 1,1,2-trichloroethyl; and 2-fluorocyclopentyl, 3-fluorocyclopentyl, 2,3-difluorocyclopentyl, 2,4-difluorocyclopentyl, 2,5-difluorocyclopentyl, 3,4-difluorocyclopentyl, 2-fluorocyclohexyl, 3-fluorocyclohexyl, 4-fluorocyclohexyl, 2,3-difluorocyclohexyl, 2,4-difluorocyclohexyl, 2,5-difluorocyclohexyl, 2,6-difluorocyclohexyl, 3,4-difluorocyclohexyl, 3,5-difluorocyclohexyl, 2,3,4-trifluorocyclohexyl, 2,3,5-trifluorocyclohexyl, 2,3,6-trifluorocyclohexyl, 2,4,5-trifluorocyclohexyl, 2,4,6-trifluorocyclohexyl, 2,5,6-trifluorocyclohexyl, 3,4,5-trifluorocyclohexyl, 2,3,4,5-tetrafluorocyclohexyl, 2,3,4,6-tetrafluorocyclohexyl, 2,3,5,6-tetrafluorocyclohexyl, and pentafluorocyclohexyl, etc.

Specific examples of halogenated alkenyl may be listed as follows: 3-bromo-1-propenyl, 4-chloro-2-ethyl-1-butenyl, fluorovinyl, 2-bromo-1-butenyl, 2-fluoro-1-butenyl, and fluoropropenyl, etc.

The ether refers to a group containing an ether bond. Specific examples of the phosphate may be listed as follows: dimethyl(3-phenylpropyl) phosphate, dimethyl(3-(2-n-pentylphenyl)propyl) phosphate, dimethyl(3-(3-n-pentylphenyl)propyl)phosphate, dimethyl (3-(4-n-pentylphenyl)propyl)phosphate, dimethyl(3-(2,4-di-n-pentylphenyl)propyl)phosphate, dimethyl (3 -(3,5 -di-n-pentylphenyl)propyl)phosphate, dimethyl(3-(2-t-pentylphenyl)propyl)phosphate, dimethyl(3-(3-t-pentylphenyl)propyl)phosphate, dimethyl(3-(4-t-pentylphenyl)propyl)phosphate, dimethyl(3-(2,4-di-t-pentylphenyl)propyl)phosphate, dimethyl(3-(3,5-di-t-pentylphenyl)propyl)phosphate, dimethyl(3-(2-cyclopentylphenyl)propyl)phosphate, dimethyl(3-(3-cyclopentylphenyl)propyl)phosphate, dimethyl(3-(4-cyclopentylphenyl)propyl)phosphate, dimethyl(3-(2-cyclohexylphenyl)propyl)phosphate, dimethyl(3-(3-cyclohexylphenyl)propyl)phosphate, and dimethyl(3-(4-cyclohexylphenyl)propyl)phosphate, etc.

The phosphate may also be diethyl(3-phenylpropyl)phosphate, diethyl(3-(2-n-pentylphenyl)propyl)phosphate, diethyl(3-(3-n-pentylphenyl)propyl)phosphate, diethyl(3-(4-n-pentylphenyl)propyl)phosphate, diethyl(3-(2,4-di-n-pentylphenyl)propyl)phosphate, diethyl(3-(3,5-di-n-pentylphenyl)propyl)phosphate, diethyl(3-(2-t-pentylphenyl)propyl)phosphate, diethyl(3-(3-t-pentylphenyl)propyl)phosphate, diethyl(3-(4-t-pentylphenyl)propyl)phosphate, diethyl(3-(2,4-di-t-pentylphenyl)propyl)phosphate, diethyl(3-(3,5-di-t-pentylphenyl)propyl)phosphate, diethyl(3-(2-cyclopentylphenyl)propyl)phosphate, diethyl(3-(3-cyclopentylphenyl)propyl)phosphate, diethyl(3-(4-cyclopentylphenyl)propyl)phosphate, diethyl(3-(2-cyclohexylphenyl)propyl)phosphate, diethyl(3-(3-cyclohexylphenyl)propyl)phosphate, diethyl(3-(4-cyclohexylphenyl)propyl)phosphate, ethyl methyl(3-phenylpropyl)phosphate, ethyl methyl (3 -(2-n-pentylphenyl)propyl)phosphate, ethyl methyl(3-(3-n-pentylphenyl)propyl)phosphate, ethyl methyl (3-(4-n-pentylphenyl)propyl)phosphate, ethyl methyl(3-(2,4-di-n-pentylphenyl)propyl)phosphate, ethyl methyl(3-(3,5-di-n-pentylphenyl)propyl)phosphate, ethyl methyl(3-(2-t-pentylphenyl)propyl)phosphate, ethyl methyl(3-(3-t-pentylphenyl)propyl)phosphate, ethyl methyl (3-(4-t-pentylphenyl)propyl)phosphate, ethyl methyl(3-(2,4-di-t-pentylphenyl)propyl)phosphate, ethyl methyl(3-(3,5-di-t-pentylphenyl)propyl)phosphate, ethyl methyl (3-(2-cyclopentylphenyl)propyl)phosphate, ethyl methyl(3-(3-cyclopentylphenyl)propyl)phosphate, ethyl methyl (3 -(4-cyclopentylphenyl)propyl)phosphate, ethyl methyl (3 -(2-cyclohexylphenyl)propyl)phosphate, ethyl methyl(3-(3-cyclohexylphenyl)propyl)phosphate, ethyl methyl (3 -(4-cyclohexylphenyl)propyl)phosphate, divinyl(3-phenylpropyl)phosphate, divinyl(3-(2-n-pentylphenyl)propyl)phosphate, divinyl(3-(3-n-pentylphenyl)propyl)phosphate, divinyl(3-(4-n-pentylphenyl)propyl)phosphate, divinyl(3-(2,4-di-n-pentylphenyl)propyl)phosphate, divinyl(3-(3,5-di-n-pentylphenyl)propyl)phosphate, divinyl(3-(2-t-pentylphenyl)propyl)phosphate, divinyl(3-(3-t-pentylphenyl)propyl)phosphate, divinyl(3-(4-t-pentylphenyl)propyl)phosphate, divinyl(3-(2,4-di-t-pentylphenyl)propyl)phosphate, divinyl(3-(3,5-di-t-pentylphenyl)propyl)phosphate, divinyl(3-(2-cyclopentylphenyl)propyl)phosphate, divinyl(3-(3-cyclopentylphenyl)propyl)phosphate, divinyl(3-(4-cyclopentylphenyl)propyl)phosphate, divinyl(3-(2-cyclohexylphenyl)propyl)phosphate, and divinyl(3-(3-cyclohexylphenyl)propyl)phosphate, etc.

Further, the phosphate may also be trifluoromethyl(3-phenylpropyl)phosphate, trifluoromethyl(3-(2-n-pentylphenyl)propyl)phosphate, trifluoromethyl(3-(3-n-pentylphenyl)propyl)phosphate, trifluoromethyl(3-(4-n-pentylphenyl)propyl)phosphate, trifluoromethyl(3-(2,4-di-n-pentylphenyl)propyl)phosphate, trifluoromethyl(3-(3,5-di-n-pentylphenyl)propyl)phosphate, trifluoromethyl(3-(2-t-pentylphenyl)propyl)phosphate, trifluoromethyl(3-(3-t-pentylphenyl)propyl)phosphate, trifluoromethyl(3-(4-t-pentylphenyl)propyl)phosphate, trifluoromethyl(3-(2,4-di-t-pentylphenyl)propyl)phosphate, trifluoromethyl(3-(3,5-di-t-pentylphenyl)propyl)phosphate, trifluoromethyl(3-(2-cyclopentylphenyl)propyl)phosphate, trifluoromethyl(3-(3-cyclopentylphenyl)propyl)phosphate, trifluoromethyl(3-(4-cyclopentylphenyl)propyl)phosphate, trifluoromethyl(3-(2-cyclohexylphenyl)propyl)phosphate, trifluoromethyl(3 -(3-cyclohexylphenyl)propyl)phosphate, and trifluoromethyl(3 -(4-cyclohexylphenyl)propyl)phosphate, etc.

Specific examples of the sulfonate may be listed as follows: (3-phenylpropyl)methanesulfonate, (3-(2-n-pentylphenyl)propyl)methanesulfonate, (3-(3-n-pentylphenyl)propyl)methanesulfonate, (3-(4-n-pentylphenyl)propyl)methanesulfonate, (3-(2,4-di-n-pentylphenyl)propyl)methanesulfonate, (3-(3,5-di-n-pentylphenyl)propyl)methanesulfonate, (3-(2-t-pentylphenyl)propyl)methanesulfonate, (3-(3-t-pentylphenyl)propyl)methanesulfonate, (3-(4-t-pentylphenyl)propyl)methanesulfonate, (3-(2,4-di-t-pentylphenyl)propyl)methanesulfonate, (3-(3,5-di-t-pentylphenyl)propyl)methanesulfonate, (3-(2-cyclopentylphenyl)propyl)methanesulfonate, (3-(3-cyclopentylphenyl)propyl)methanesulfonate, (3-(4-cyclopentylphenyl)propyl)methanesulfonate, (3-(2-cyclohexylphenyl)propyl)methanesulfonate, (3-(3-cyclohexylphenyl)propyl)methanesulfonate, and (3-(4-cyclohexylphenyl)propyl)methanesulfonate, etc.

The sulfonate may also be (3-phenylpropyl)ethanesulfonate, (3-(2-n-pentylphenyl)propyl)ethanesulfonate, (3-(3-n-pentylphenyl)propyl)ethanesulfonate, (3-(4-n-pentylphenyl)propyl)ethanesulfonate, (3-(2,4-di-n-pentylphenyl)propyl)ethanesulfonate, (3-(3,5-di-n-pentylphenyl)propyl)ethanesulfonate, (3-(2-t-pentylphenyl)propyl)ethanesulfonate, (3-(3-t-pentylphenyl)propyl)ethanesulfonate, (3-(4-t-pentylphenyl)propyl)ethanesulfonate, (3-(2,4-di-t-pentylphenyl)propyl)ethanesulfonate, (3-(3,5-di-t-pentylphenyl)propyl)ethanesulfonate, (3-(2-cyclopentylphenyl)propyl)ethanesulfonate, (3-(3-cyclopentylphenyl)propyl)ethanesulfonate, (3-(4-cyclopentylphenyl)propyl)ethanesulfonate, (3-(2-cyclohexylphenyl)propyl)ethanesulfonate, (3-(3-cyclohexylphenyl)propyl)ethanesulfonate, (3-(4-cyclohexylphenyl)propyl)ethanesulfonate, (3-phenylpropyl)vinyl sulfonate, (3-(2-n-pentylphenyl)propyl)vinyl sulfonate, (3-(3-n-pentylphenyl)propyl)vinyl sulfonate, (3-(4-n-pentylphenyl)propyl)vinyl sulfonate, (3-(2,4-di-n-pentylphenyl)propyl)vinyl sulfonate, (3-(3,5-di-n-pentylphenyl)propyl)vinyl sulfonate, (3-(2-t-pentylphenyl)propyl)vinyl sulfonate, (3-(3-t-pentylphenyl)propyl)vinyl sulfonate, (3-(4-t-pentylphenyl)propyl)vinyl sulfonate, (3-(2,4-di-t-pentylphenyl)propyl)vinyl sulfonate, (3-(3,5-di-t-pentylphenyl)propyl)vinyl sulfonate, (3-(2-cyclopentylphenyl)propyl)vinyl sulfonate, (3-(3-cyclopentylphenyl)propyl)vinyl sulfonate, (3-(4-cyclopentylphenyl)propyl)vinyl sulfonate, (3-(2-cyclohexylphenyl)propyl)vinyl sulfonate, (3-(3-cyclohexylphenyl)propyl)vinyl sulfonate, (3-(4-cyclohexylphenyl)propyl)vinyl sulfonate, (3-phenylpropyl)allyl sulfonate, (3-(2-n-pentylphenyl)propyl)allyl sulfonate, (3-(3-n-pentylphenyl)propyl)allyl sulfonate, (3-(4-n-pentylphenyl)propyl)allyl sulfonate, (3-(2,4-di-n-pentylphenyl)propyl)allyl sulfonate, (3-(3,5-di-n-pentylphenyl)propyl)allyl sulfonate, (3-(2-t-pentylphenyl)propyl)allyl sulfonate, (3-(3-t-pentylphenyl)propyl)allyl sulfonate, (3-(4-t-pentylphenyl)propyl)allyl sulfonate, (3-(2,4-di-t-pentylphenyl)propyl)allyl sulfonate, (3-(3,5-di-t-pentylphenyl)propyl)allyl sulfonate, (3-(2-cyclopentylphenyl)propyl)allyl sulfonate, (3-(3-cyclopentylphenyl)propyl)allyl sulfonate, (3-(4-cyclopentylphenyl)propyl)allyl sulfonate, (3-(2-cyclohexylphenyl)propyl)allyl sulfonate, (3-(3-cyclohexylphenyl)propyl)allyl sulfonate, and (3-(4-cyclohexylphenyl)propyl)allyl sulfonate, etc.

Further, the sulfonate may also be (3-phenylpropyl)trifluoromethanesulfonate, (3-(2-n-pentylphenyl)propyl)trifluoromethanesulfonate, (3-(3-n-pentylphenyl)propyl)trifluoromethanesulfonate, (3-(4-n-pentylphenyl)propyl)trifluoromethanesulfonate, (3-(2,4-di-n-pentylphenyl)propyl)trifluoromethanesulfonate, (3 -(3,5 -di-n-pentylphenyl)propyl)trifluoromethanesulfonate, (3-(2-t-pentylphenyl)propyl)trifluoromethanesulfonate, (3-(3-t-pentylphenyl)propyl)trifluoromethanesulfonate, (3-(4-t-pentylphenyl)propyl)trifluoromethanesulfonate, (3-(2,4-di-t-pentylphenyl)propyl)trifluoromethanesulfonate, (3-(3,5-di-t-pentylphenyl)propyl)trifluoromethanesulfonate, (3-(2-cyclopentylphenyl)propyl)trifluoromethanesulfonate, (3-(3-cyclopentylphenyl)propyl)trifluoromethanesulfonate, (3-(4-cyclopentylphenyl)propyl)trifluoromethanesulfonate, (3-(2-cyclohexylphenyl)propyl)trifluoromethanesulfonate, (3-(3-cyclohexylphenyl)propyl)trifluoromethanesulfonate, (3-(4-cyclohexylphenyl)propyl)trifluoromethanesulfonate, (3-phenylpropyl)benzenesulfonate, (3-(2-n-pentylphenyl)propyl)benzenesulfonate, (3-(3-n-pentylphenyl)propyl)benzenesulfonate, (3-(4-n-pentylphenyl)propyl)benzenesulfonate, (3-(2,4-di-n-pentylphenyl)propyl)benzenesulfonate, (3-(3,5-di-n-pentylphenyl)propyl)benzenesulfonate, (3-(2-t-pentylphenyl)propyl)benzenesulfonate, (3-(3-t-pentylphenyl)propyl)benzenesulfonate, (3-(4-t-pentylphenyl)propyl)benzenesulfonate, (3-(2,4-di-t-pentylphenyl)propyl)benzenesulfonate, (3-(3,5-di-t-pentylphenyl)propyl)benzenesulfonate, (3-(2-cyclopentylphenyl)propyl)benzenesulfonate, (3-(3-cyclopentylphenyl)propyl)benzenesulfonate, (3-(4-cyclopentylphenyl)propyl)benzenesulfonate, (3 -(2-cyclohexylphenyl)propyl)benzenesulfonate, (3-(3-cyclohexylphenyl)propyl)benzenesulfonate, and (3-(4-cyclohexylphenyl)propyl)benzenesulfonate, etc.

Specific examples of silane may be listed as follows: butylmethyldifluorosilane, isobutylmethyldifluorosilane, pentylmethyldifluorosilane, hexylmethyldifluorosilane, heptylmethyldifluorosilane, octylmethyldifluorosilane, cyclopentylmethyldifluorosilane, cyclohexylmethyldifluorosilane, cycloheptylmethyldifluorosilane, cyclooctylmethyldifluorosilane, cyclopentylmethyldifluorosilane, cyclohexylmethyldifluorosilane, cycloheptylmethyldifluorosilane, cyclooctylmethyldifluorosilane, 3-(dimethylfluorosilyl)propyl acetate, 3-(dimethylfluorosilyl)butyl acetate, 3-(dimethylfluorosilyl)pentyl acetate, 3-(dimethylfluorosilyl)hexyl acetate, 2-(dimethylfluorosilyl) ethyl propionate, 3-(dimethylfluorosilyl)propyl propionate, 3-(dimethylfluorosilyl)butyl propionate, 3-(dimethylfluorosilyl)pentyl propionate, 3-(dimethylfluorosilyl)hexyl propionate, 2-(dimethylfluorosilyl)ethyl butyrate, 3-(dimethylfluorosilyl)propyl butyrate, 4-(dimethylfluorosilyl)butyl butyrate, dimethylfluorosilyl methyl acetate, dimethylfluorosilyl ethyl acetate, dimethylfluorosilyl butyl acetate, dimethylfluorosilyl pentyl acetate, dimethylfluorosilyl hexyl acetate, 3-(dimethylfluorosilyl)methyl propionate, 3-(dimethylfluorosilyl)ethyl propionate, 3-(dimethylfluorosilyl)propyl propionate, 3-(dimethylfluorosilyl)butyl propionate, and 3-(dimethylfluorosilyl)pentyl propionate, etc.

Silane may also be trimethylfluorosilane, ethyldimethylfluorosilane, propyldimethylfluorosilane, isopropyldimethylfluorosilane, butyldimethylfluorosilane, sec-butyldimethylfluorosilane, t-butyldimethylfluorosilane, pentyldimethylfluorosilane, hexyl dimethylfluorosilane, heptyldimethylfluorosilane, octyldimethylfluorosilane, 2-ethylhexyldimethylfluorosilane, trifluoromethyldimethylfluorosilane, tetrafluoroethyldimethylfluorosilane, pentafluoropropyldimethylfluorosilane, 2,2,2-trifluoroethyldimethylfluorosilane, vinyldimethylfluorosilane, allyl dimethylfluorosilane, 1-propenyl dimethylfluorosilane, isopropenyldimethylfluorosilane, 2-butenyldimethylfluorosilane, 1,3 -butadienyl dimethylfluorosilane, 2-pentenyldimethylfluorosilane, 2-octenyldimethylfluorosilane, ethynyl dimethylfluorosilane, 1-propynyldimethylfluorosilane, 2-propynyldimethylfluorosilane, 1-butynyldimethylfluorosilane, 2-butynyldimethylfluorosilane, 3 -butynyl dimethylfluorosilane, phenyl dimethylfluorosilane, 2-fluorophenyldimethylfluorosilane, 3-fluorophenyldimethylfluorosilane, 4-fluorophenyldimethylfluorosilane, 2,4-difluorophenyldimethylfluorosilane, 3,5-difluorophenyldimethylfluorosilane, 2,6-difluorophenyldimethylfluorosilane, 2,3-difluorophenyldimethylfluorosilane, 4,5-difluorophenyldimethylfluorosilane, 2,4,6-trifluorophenyldimethylfluorosilane, 2,3,4-trifluorophenyldimethylfluorosilane, tetrafluorophenyldimethylfluorosilane, 2-methylphenyldimethylfluorosilane, 3-methylphenyldimethylfluorosilane, 4-methylphenyldimethylfluorosilane, 2,4-dimethylphenyldimethylfluorosilane, and 3,5-dimethylphenyldimethylfluorosilane, etc.

Further, silane may also be 1,2-bis(dimethylfluorosilyl)ethane, 1,2-bis(diethylfluorosilyl)ethane, 1,2-bis(dipropylfluorosilyl)ethane, 1,2-bis(dibutylfluorosilyl)ethane, 1,3-bis(dimethylfluorosilyl)propane, 1,2-bis(diethylfluorosilyl)propane, 1,3-bis(dipropylfluorosilyl)propane, 1,3-bis(dibutylfluorosilyl)propane, 1,4-bis(dimethylfluorosilyl)butane, 1,4-bis(diethylfluorosilyl)butane, 1,4-bis(dipropylfluorosilyl)butane, 1,4-bis(dibutylfluorosilyl)butane, 1,5-bis(dimethylfluorosilyl)pentane, 1,5-bis(diethylfluorosilyl)pentane, 1,5-bis(dipropylfluorosilyl)pentane, 1,5-bis(dibutylfluorosilyl)pentane, 1,6-bis(dimethylfluorosilyl)hexane, 3-ethoxypropyldimethylfluorosilane, 3-propoxypropyldimethylfluorosilane, 3-butoxypropyldimethylfluorosilane, 3-pentoxypropyldimethylfluorosilane, 3-hexoxypropyldimethylfluorosilane, 4-methoxybutyldimethylfluorosilane, 4-ethoxybutyldimethylfluorosilane, 4-propoxybutyldimethylfluorosilane, 4-butoxybutyldimethylfluorosilane, and 4-pentoxybutyldimethylfluorosilane, etc.

In a preferred embodiment, R₁ is selected from one of methyl, ethyl, propyl, vinyl, and propenyl.

Further preferably, the sulfonimide compound accounts for 0.1% to 5% of the total mass of the electrolyte.

### 1-2. Second Additive

In some embodiments, the additive further includes a second additive that accounts for 0.01% to 10% of the total mass of the electrolyte.

The second additive of the present disclosure may be one or more of lithium difluorophosphate, lithium bis(oxalate) borate, 1,3-propane sultone, methylene methanedisulfonate, or lithium difluoro oxalate borate, and may also be an ester containing an unsaturated bond and/or a halogen atom.

The ester containing the unsaturated bond may be a carbonate with the unsaturated bond, which includes all carbonates well-known in the art and with carbon-carbon unsaturated bonds such as carbon-carbon double bonds or carbon-carbon triple bonds. In addition, the carbonate with the unsaturated bond may also include carbonates with an aromatic ring.

Examples of unsaturated carbonates may be listed as follows: derivatives of vinylene carbonate, derivatives of ethylene carbonate substituted with a substituent having an aromatic ring or a carbon-carbon unsaturated bond, phenyl carbonates, vinyl carbonates, and allyl carbonates, etc.

Specific examples of the derivatives of vinylene carbonate include, but are not limited to, vinylene carbonate, methyl vinylene carbonate, 4,5-dimethyl vinylene carbonate, phenyl vinylene carbonate, and 4,5-diphenyl vinylene carbonate, etc.

Specific examples of the derivatives of ethylene carbonate substituted with a substituent having an aromatic ring or a carbon-carbon unsaturated bond include, but are not limited to, vinyl ethylene carbonate, 4,5-divinyl ethylene carbonate, phenyl ethylene carbonate, and 4,5-diphenyl ethylene carbonate, etc.

Specific examples of phenyl carbonates include, but are not limited to, diphenyl carbonate, ethyl phenyl carbonate, methyl phenyl carbonate, and t-butyl phenyl carbonate, etc.

Specific examples of vinyl carbonates include, but are not limited to, divinyl carbonate and methyl vinyl carbonate, etc.

Specific examples of allyl carbonates include, but are not limited to, diallyl carbonate and allyl methyl carbonate, etc.

In addition, the ester containing the halogen atom may be a carbonate with the halogen atom. The halogen atom may be one or more of fluorine atom, chlorine atom, bromine atom, and iodine atom, preferably the fluorine atom and the chlorine atom, and further preferably the fluorine atom. Examples of halogenated carbonates may be listed as follows: derivatives of ethylene carbonate, derivatives of dimethyl carbonate, derivatives of ethyl methyl carbonate, and derivatives of diethyl carbonate, etc.

Specific examples of the derivatives of ethylene carbonate include, but are not limited to, fluoroethylene carbonate, chloroethylene carbonate, 4,4-difluoroethylene carbonate, 4,5-difluoroethylene carbonate , 4,4-dichloroethylene carbonate, 4,5-dichloroethylene carbonate, 4-fluoro-4-methylethylene carbonate, 4-chloro-4-methylethylene carbonate, 4,5-difluoro-4-methylethylene carbonate, 4,5-dichloro-4-methylethylene carbonate, 4-fluoro-5-methylethylene carbonate, 4-chloro-5-methylethylene carbonate, 4,4-difluoro-5-methylethylene carbonate, 4,4-dichloro-5-methylethylene carbonate, 4-(fluoromethyl)ethylene carbonate, 4-(chloromethyl)ethylene carbonate, 4-(difluoromethyl)ethylene carbonate, 4-(dichloromethyl)ethylene carbonate, 4-(trifluoromethyl)ethylene carbonate, 4-(trichloromethyl)ethylene carbonate, 4-(fluoromethyl)-4-fluoroethylene carbonate, 4-(chloromethyl)-4-chloroethylene carbonate, 4-(fluoromethyl)-5-fluoroethylene carbonate, 4-(chloromethyl)-5-chloroethylene carbonate, 4-fluoro-4,5-dimethylethylene carbonate, 4-chloro-4,5-dimethylethylene carbonate, 4,5-difluoro-4,5-dimethylethylene carbonate, 4,5-dichloro-4,5-dimethylethylene carbonate, 4,4-difluoro-5,5-dimethylethylene carbonate, and 4,4-dichloro-5,5-dimethylethylene carbonate, etc.

Specific examples of the derivatives of dimethyl carbonate include, but are not limited to, fluoromethyl methyl carbonate, difluoromethyl methyl carbonate, trifluoromethyl methyl carbonate, bis(fluoromethyl) carbonate, bis(difluoromethyl) carbonate, bis(trifluoromethyl) carbonate, chloromethyl methyl carbonate, dichloromethyl methyl carbonate, trichloromethyl methyl carbonate, bis(chloromethyl) carbonate, bis(dichloromethyl) carbonate, and bis(trichloromethyl) carbonate, etc.

Specific examples of the derivatives of ethyl methyl carbonate include, but are not limited to, 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, ethyl trifluoromethyl carbonate, 2-chloroethyl methyl carbonate, ethyl chloromethyl carbonate, 2,2-dichloroethyl methyl carbonate, 2-chloroethyl chloromethyl carbonate, ethyl dichloromethyl carbonate, 2,2,2-trichloroethyl methyl carbonate, 2,2-dichloroethyl chloromethyl carbonate, 2-chloroethyl dichloromethyl carbonate, and ethyl trichloromethyl carbonate, etc.

Specific examples of the derivatives of diethyl carbonate include, but are not limited to, ethyl (2-fluoroethyl) carbonate, ethyl (2,2-difluoroethyl) carbonate, bis(2-fluoroethyl) carbonate, ethyl (2,2,2-trifluoroethyl) carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethyl carbonate, bis(2,2,2-trifluoroethyl) carbonate, ethyl (2-chloroethyl) carbonate, ethyl (2,2-dichloroethyl) carbonate, bis(2-chloroethyl) carbonate, ethyl (2,2,2-trichloroethyl) carbonate, 2,2-dichloroethyl-2'-chloroethyl carbonate, bis(2,2-dichloroethyl) carbonate, 2,2,2-trichloroethyl-2'-chloroethyl carbonate, 2,2,2-trichloroethyl-2',2'-dichloroethyl carbonate, and bis(2,2,2-trichloroethyl) carbonate, etc.

In addition, a carbonate with both the unsaturated bond and the halogen atom may also be selected as the second additive. Examples of halogenated unsaturated carbonates may be listed as follows: derivatives of vinylene carbonate, derivatives of ethylene carbonate substituted with a substituent having an aromatic ring or a carbon-carbon unsaturated bond, and allyl carbonates, etc.

Specific examples of the derivatives of vinylene carbonate include, but are not limited to, fluorovinylene carbonate, 4-fluoro-5-methyl vinylene carbonate, 4-fluoro-5-phenyl vinylene carbonate, chlorovinylene carbonate, 4-chloro-5-methyl vinylene carbonate, and 4-chloro-5-phenyl vinylene carbonate, etc.

Specific examples of the derivatives of ethylene carbonate substituted with a substituent having an aromatic ring or a carbon-carbon unsaturated bond include, but are not limited to, 4-fluoro-4-vinylethylene carbonate, 4-fluoro-5-vinylethylene carbonate, 4,4-difluoro-5-vinylethylene carbonate, 4,5-difluoro-4-vinylethylene carbonate, 4-chloro-5-vinylethylene carbonate, 4,4-dichloro-4-vinylethylene carbonate, 4,5-dichloro-4-vinylethylene carbonate, 4-fluoro-4,5-divinylethylene carbonate, 4,5-difluoro-4,5-divinylethylene carbonate, 4-chloro-4,5-divinylethylene carbonate, 4,5-dichloro-4,5-divinylethylene carbonate, 4-fluoro-4-phenylethylene carbonate, 4-fluoro-5-phenylethylene carbonate, 4,4-difluoro-4-phenylethylene carbonate, 4,5-difluoro-4-phenylethylene carbonate, 4-chloro-4-phenylethylene carbonate, 4-chloro-5-phenylethylene carbonate, 4,4-dichloro-5-phenylethylene carbonate, 4,5-dichloro-4-phenylethylene carbonate, 4,5-difluoro-4,5-diphenylethylene carbonate, and 4,5-dichloro-4,5-diphenyl ethylene carbonate, etc.

Specific examples of phenyl carbonates include, but are not limited to, fluoromethyl phenyl carbonate, 2-fluoroethyl phenyl carbonate, 2,2-difluoroethyl phenyl carbonate, 2,2,2-trifluoroethyl phenyl carbonate, chloromethyl phenyl carbonate, 2-chloroethyl phenyl carbonate, 2,2-dichloroethyl phenyl carbonate, and 2,2,2-trichloroethyl phenyl carbonate, etc.

Specific examples of vinyl carbonates include, but are not limited to, fluoromethyl vinyl carbonate, 2-fluoroethyl vinyl carbonate, 2,2-difluoroethyl vinyl carbonate, 2,2,2-trifluoroethyl vinyl carbonate, chloromethyl vinyl carbonate, 2-chloroethyl vinyl carbonate, 2,2-dichloroethyl vinyl carbonate, and 2,2,2-trichloroethyl vinyl carbonate, etc.

Specific examples of allyl carbonates include, but are not limited to, fluoromethyl allyl carbonate, 2-fluoroethyl allyl carbonate, 2,2-difluoroethyl allyl carbonate, 2,2,2-trifluoroethyl allyl carbonate, chloromethyl allyl carbonate, 2-chloroethyl allyl carbonate, 2,2-dichloroethyl allyl carbonate, and 2,2,2-trichloroethyl allyl carbonate, etc.

In some preferred embodiments, the second additive is selected from one or more of vinylene carbonate, fluoroethylene carbonate, lithium difluorophosphate, lithium bis(oxalate)borate, lithium difluoro oxalate borate, 1,3-propane sultone, triallyl isocyanurate, methylene methanedisulfonate, vinyl sulfate, triallyl phosphate, or tripropynyl phosphate.

### <Non-Aqueous Organic Solvent>

The non-aqueous organic solvent contained in the electrolyte for the lithium secondary battery of the present disclosure is not particularly limited, as long as it would not adversely affect the properties of the battery manufactured using the same. Preferably, a solvent with high solubility, a wide liquid-state range, a high dielectric constant, and high stability is used. The non-aqueous organic solvent includes, but is not limited to, a cyclic ester, a chain ester, chain ether, a phosphorus-containing solvent, and a sulfur-containing solvent, etc.

The cyclic ester may be a cyclic carbonate or a cyclic carboxylic ester. The type of cyclic carbonate is not limited. Examples of the commonly used cyclic carbonates include, but are not limited to, ethylene carbonate, propylene carbonate, butylene carbonate (such as 1,2-butanediol cyclic carbonate and 2,3-butanediol cyclic ocarbonate), γ-butyrolactone, and catechol carbonate, etc.

The type of cyclic carboxylic ester is not particularly limited. Examples of the commonly used cyclic carboxylic esters include, but are not limited to, γ-butyrolactone, γ-valerolactone, and δ-valerolactone, etc.

The chain ester may be a chain carbonate or a chain carboxylic ester. The type of chain carbonate is not particularly limited in the present disclosure. Examples of the commonly used chain carbonates include, but are not limited to, dimethyl carbonate, diethyl carbonate, carbonic acid diethyl ester, dipropyl carbonate, methyl ethyl carbonate, methyl propyl carbonate, ethyl propyl carbonate, and di-n-propyl carbonate, etc.

The type of chain carboxylic ester is not limited, neither. Examples of the commonly used chain carboxylic esters include, but are not limited to, methyl formate, ethyl formate, propyl formate, methyl acetate, ethyl acetate, n-propyl acetate, isopropyl acetate, n-butyl acetate, isobutyl acetate, t-butyl acetate, methyl propionate, ethyl propionate, n-propyl propionate, isopropyl propionate, n-butyl propionate, isobutyl propionate, t-butyl propionate, and 2,2-difluoroethyl acetate, etc.

The type of chain ether is not particularly limited. Examples of the commonly used chain ether include, but are not limited to, dimethoxymethane, dimethoxyethane, diethoxymethane, diethoxyethane, ethoxymethoxymethane, and ethoxymethoxyethane, etc.

The type of phosphorus-containing organic solvent is not particularly limited, neither. Examples of the commonly used phosphorus-containing organic solvents include, but are not limited to, phosphates such as trimethyl phosphate, triethyl phosphate, and triphenyl phosphate; phosphites such as trimethyl phosphite, triethyl phosphite, and triphenyl phosphite; and phosphine oxides such as trimethyl phosphine oxide, triethyl phosphine oxide, and triphenyl phosphine oxide, etc.

The type of sulfur-containing organic solvent is not particularly limited, neither. Examples of the commonly used sulfur-containing organic solvents include, but are not limited to, ethylene sulfite, 1,3-propane sultone, 1,4-butane sultone, methyl methanesulfonate, busulfan, sulfolane, sulfolene, dimethyl sulfone, diphenyl sulfone, methyl phenyl sulfone, dibutyl disulfide, dicyclohexyl disulfide, tetramethylthiuram monosulfide, N,N-dimethylmethanesulfonamide, and N,N-diethylmethanesulfonamide, etc.

The non-aqueous organic solvent in the electrolyte of the present disclosure may be any one of the above-mentioned solvents alone or a combination of the above-mentioned solvents.

Preferably, the non-aqueous organic solvent includes the cyclic ester and/or the chain ester. Further preferably, the non-aqueous organic solvent includes the cyclic ester and the chain ester, where the cyclic ester is the cyclic carbonate, and the chain ester is the chain carbonate. More preferably, the non-aqueous organic solvent is a combination of ethylene carbonate, methyl ethyl carbonate, diethyl carbonate, and propylene carbonate.

The applicant has found that the combination of the above-mentioned non-aqueous solvents in cooperation with a particular sulfonimide compound can improve the dielectric constant of the solvent, reduce the viscosity of the electrolyte, and improve the stability of the electrolyte, thereby facilitating the improvement of the overall performance of the lithium secondary battery.

Further preferably, the non-aqueous organic solvent accounts for 67% to 91% of the total mass of the electrolyte.

### <Lithium Salt>

The lithium salt of the present disclosure may include, but is not limited to, inorganic lithium salts such as LiClO₄, LiAsF₆, LiPF₆, Li₂CO₃, and LiBF₄; fluorine-containing organic lithium salts such as LiCF₃SO₃, LiN(CF₃SO₂)₂, LiN(C₂F₅SO₂)₂, lithium 1,3-hexafluoropropane disulfonimide, lithium 1,2-tetrafluoroethane disulfonimide, lithium bis(fluorosulfonyl)imide, lithium bis(trifluoromethanesulfonyl)imide, LiN(CF₃SO₂)(C₄F₉SO₂), LiC(CF₃SO₂)₃, LiPF₄(CF₃)₂, LiPF₄(C₂F₅)₂, LiPF₄(CF₃SO₂)₂, LiPF₄(C₂F₅SO₂)₂, LiBF₂(CF₃)₂, LiBF₂(C₂F₅)₂, LiBF₂(CF₃SO₂)₂, and LiBF₂(C₂F₅SO₂)₂; and dicarboxylate-containing lithium complex such as lithium bis(oxalato)borate, lithium tris(oxalato)phosphate, and lithium difluorooxalatoborate, etc.

In some preferred embodiments, the lithium salt is selected from one or more of lithium hexafluorophosphate, lithium bis(fluorosulfonyl)imide, or lithium bis(trifluoromethanesulfonyl)imide.

Further preferably, the lithium salt accounts for 8% to 18% of the total mass of the electrolyte.

A second aspect of the present disclosure provides a lithium secondary battery, where an electrolyte for the lithium secondary battery is the electrolyte described above, and the lithium secondary battery is one of a lithium ion battery, a lithium sulfur battery, or a lithium air battery.

The lithium ion battery, the lithium sulfur battery, and the lithium air battery in the present disclosure are technical terms well-known to those skilled in the art. The shape and the type of the lithium secondary battery in the present disclosure are not particularly limited. The lithium secondary battery may be a lithium secondary battery such as the lithium ion battery, a lithium ion polymer battery and a lithium sulfur battery, and a lithium primary battery. The lithium battery may be manufactured by a manufacturing method known in the related art.

A cathode for the lithium secondary battery in the present disclosure may include a cathode current collector and a cathode active material layer formed on the cathode current collector, where the cathode active material layer includes a cathode active material.

In some embodiments, the cathode active material for the lithium secondary battery is a lithium-containing transition metal oxide and/or a lithium-containing transition metal phosphate compound.

In some embodiments, the cathode active material is selected from at least one of Li₁₊ₐ(NiₓCo_{y}M_{1-x-y})O₂, Li(NiₙMnₘCo₂₋ₙ₋ₘ)O₄, or LiMₚ(PO₄)_{q}, where 0 ≤ a ≤ 0.3, 0 ≤ x ≤ 1, 0 ≤ y ≤ 1, 0 ≤ x + y ≤1, 0 ≤ n ≤ 2, 0 ≤ m ≤ 2, 0 ≤ n + m ≤ 2, M is Al, Fe, Ni, Co, Mn, or V, 0 < p < 5, and 0 < q < 5.

An anode of the lithium secondary battery in the present disclosure includes an anode current collector and an anode active material layer formed on the anode current collector, where the anode active material layer includes an anode active material.

The anode active material is selected from at least one of lithium metal, lithium alloy, carbon material, and silicon or tin and an oxide thereof.

Examples of the carbon material may be crystalline carbon, amorphous carbon, or a mixture thereof. Non-limiting examples of the crystalline carbon include natural graphite, artificial graphite, expanded graphite, graphene, fullerene carbon dust, carbon nanotubes, and carbon fibers, etc. Non-limiting examples of the amorphous carbon include soft carbon, hard carbon, mesophase pitch carbide, and calcined coke, etc. A carbon-containing anode active material may be used in the form of balls, sheets, fibers, tubes, or powder.

Examples of the lithium alloy may be an Si/Sn/Al/Ge/Pb/Bi/Sb/Si-Y alloy (where Y is an alkali metal, alkaline earth metal, element in group 13, element in group 14, transition metal, or rare earth element or a combination thereof other than Si) or an Sn-Y alloy (where Y is the alkali metal, alkaline earth metal, element in group 13, element in group 14, transition metal, or rare earth element or the combination thereof other than Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The cathode or anode active material layer further includes an auxiliary material. Examples of the auxiliary material include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, polyvinylidene fluoride, a polymer containing ethylene oxide, polyvinylpyrrolidone, polyurethane, polytetrafluoroethylene, polyvinylidene difluoride, polyethylene, polypropylene, a styrene-butadiene rubber, an acrylated styrene-butadiene rubber, an epoxy resin, and a nylon.

The auxiliary material may further include some conductive agents such as natural graphite, artificial graphite, carbon black, acetylene black, Ketjen black, and carbon fibers, metal powder or fibers of copper, nickel, aluminum or silver, and a conductive polymer such as polyphenylene derivatives, or a mixture thereof.

The present disclosure is specifically described below through examples. It is necessary to point out that the following examples are merely used to further illustrate the present disclosure and cannot be understood as limiting the scope of the present disclosure. Some non-essential improvements and adjustments made by those skilled in the art based on the above-mentioned content of the present disclosure fall within the scope of the present disclosure.

Compounds involved in the examples have the following structures:

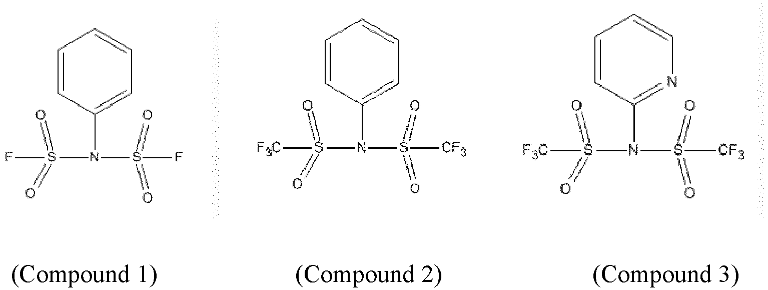

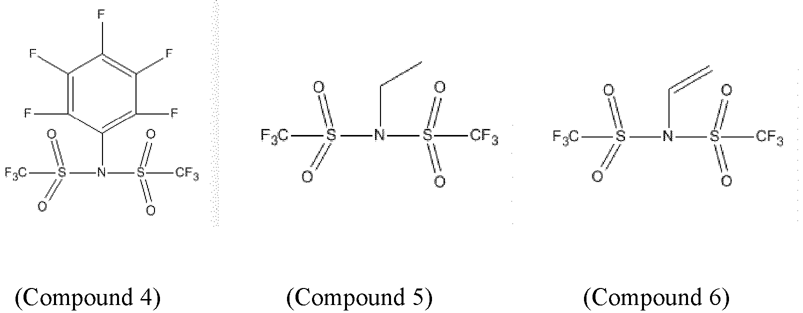

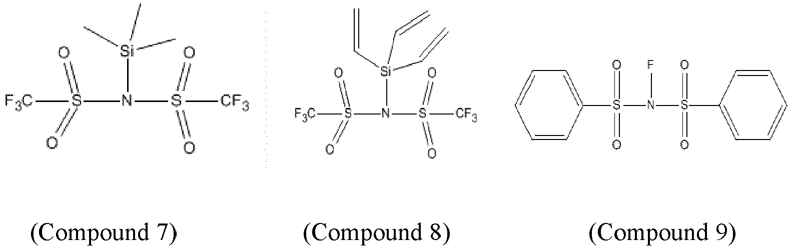

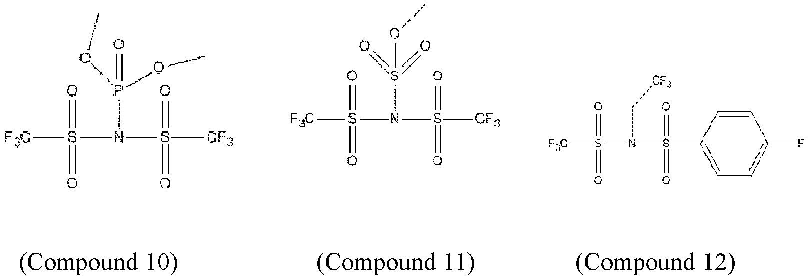

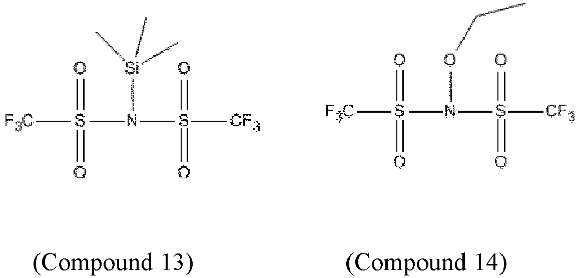

### Example 1

### (1) Preparation of a cathode plate of a lithium secondary battery

A cathode active material being nickel-cobalt lithium manganate (LiNi_{1/3}Co_{1/3}Mn_{1/3}O₂), a conductive agent being Super-P (conductive carbon black), and an adhesive being polyvinylidene fluoride (PVDF) were dissolved in a solvent being N-methylpyrrolidone (NMP) at a mass ratio of 96: 2.0: 2.0 and mixed uniformly into a cathode slurry. Then, the cathode slurry was coated uniformly on a current collector being aluminum foil in an amount of 0.018 g/cm², and then the current collector was oven dried at 85 °C, subjected to cold pressing, edge trimming, cutting, and stripping, and dried in vacuum at 85 °C for 4 h. Then a tab was welded, so as to make the cathode plate of the lithium secondary battery that meets requirements.

### (2) Preparation of an anode plate of the lithium secondary battery

An anode active material being graphite, a conductive agent being Super-P, a thickener being carboxymethyl cellulose (CMC), and an adhesive being styrene-butadiene rubber (SBR) (styrene: butadiene = 1: 1) were dissolved in a solvent deionized water at a mass ratio of 96.5: 1.0: 1.0: 1.5 and mixed uniformly into an anode slurry. Then, the anode slurry was coated uniformly on a current collector being aluminum foil in an amount of 0.0089 g/cm², and then the current collector was oven dried at 85 °C, subjected to cold pressing, edge trimming, cutting, and stripping, and dried in vacuum at 110 °C for 4 h. Then a tab was welded, so as to make the anode plate of the lithium secondary battery that meets requirements.

### (3) Preparation of an electrolyte of the lithium secondary battery

In the electrolyte of the lithium secondary battery, lithium hexafluorophosphate was used as a lithium salt and accounted for 12.5% of the total mass of the electrolyte, and a mixture of ethylene carbonate, methyl ethyl carbonate, and diethyl carbonate was used as a non-aqueous organic solvent and accounted for 81.5% of the total mass of the electrolyte, where the mass ratio of ethylene carbonate to methyl ethyl carbonate to diethyl carbonate was 3: 5: 2. In addition, the electrolyte of the lithium secondary battery further includes an additive, where the additive was Compound 1 which accounted for 3.0% of the total mass of the electrolyte of the lithium secondary battery. Vinylene carbonate and 1,3-propane sultone were used as a second additive and accounted for 1.0% and 2.0% of the total mass of the electrolyte, respectively.

### (4) Preparation of the lithium secondary battery

The cathode plate and the anode plate of the lithium secondary battery that were prepared by the above processes and a separator were wound into a cell with a thickness of 8 mm, a width of 60 mm, and a length of 130 mm, the cell was vacuum-baked at 75 °C for 10 h, and the electrolyte was injected and rested for 24 h. Then, the cell was charged to 4.2 V at a constant current of 0.1C (160 mA), charged at a constant voltage of 4.2 V until the current dropped to 0.05C (80 mA), and then discharged at a constant current of 0.1C (160 mA) to 3.0 V, and the charge/discahge cycle was repeated twice. Finally, the cell was charged to 3.8 V at a constant current of 0.1C (160 mA). Thus the preparation of a lithium ion battery was finished.

### Example 2

A lithium secondary battery was prepared by the method of Example 1 except that in an electrolyte of the lithium secondary battery, lithium hexafluorophosphate was used as a lithium salt and accounted for 10.0% of the total mass of the electrolyte, and ethylene carbonate and methyl ethyl carbonate were used as a non-aqueous organic solvent and accounted for 87.0% of the total mass of the electrolyte, where the mass ratio of ethylene carbonate to methyl ethyl carbonate was 1: 2. Compound 2 was added and accounted for 1.0% of the total mass of the electrolyte. Lithium difluorophosphate was used as a second additive and accounted for 1.0% of the total mass of the electrolyte. A cathode material for the lithium secondary battery was LiNi_{0.8}Co_{0.1}Mn_{0.1}O₂.

### Example 3

A lithium secondary battery was prepared by the method of Example 1 except that ethylene carbonate and methyl ethyl carbonate were used as a non-aqueous organic solvent and accounted for 83.0% of the total mass of the electrolyte, where the mass ratio of ethylene carbonate to methyl ethyl carbonate was 1: 3. Compound 3 was added and accounted for 1.0% of the total mass of the electrolyte. Vinylene carbonate and fluoroethylene carbonate were used as a second additive and accounted for 0.5% and 3.0% of the total mass of the electrolyte, respectively. A cathode material for the lithium secondary battery was LiNi_{0.8}Co_{0.15}Al_{0.05}O₂.

### Example 4

A lithium secondary battery was prepared by the method of Example 1 except that ethylene carbonate and diethyl carbonate were used as a non-aqueous organic solvent and accounted for 84.0% of the total mass of the electrolyte, where the mass ratio of ethylene carbonate to diethyl carbonate was 1: 2. Compound 4 was added and accounted for 2.5% of the total mass of the electrolyte. Lithium difluoro oxalate borate and fluoroethylene carbonate were used as a second additive and accounted for 0.5% and 5.0% of the total mass of the electrolyte, respectively. A cathode material for the lithium secondary battery was LiCoO₂, and an anode material was a silicon-carbon composite.

### Example 5

A lithium secondary battery was prepared by the method of Example 1 except that in an electrolyte of the lithium secondary battery, lithium hexafluorophosphate was used as a lithium salt and accounted for 15% of the total mass of the electrolyte, and ethylene carbonate, propylene carbonate, and diethyl carbonate were used as a non-aqueous organic solvent and accounted for 81.5% of the total mass of the electrolyte, where the mass ratio of ethylene carbonate to propylene carbonate to diethyl carbonate was 4: 1: 5. Compound 5 was added and accounted for 1.0% of the total mass of the electrolyte. Vinylene carbonate and tripropynyl phosphate were used as a second additive and accounted for 0.5% and 2.0% of the total mass of the electrolyte, respectively. A cathode material for the lithium secondary battery was LiNi_{0.8}Co_{0.15}Al_{0.05}O₂, and an anode material was lithium titanate. The charge cut-off voltage for the lithium secondary battery was 2.7 V.

### Example 6

A lithium secondary battery was prepared by the method of Example 1 except that a mixture of ethylene carbonate, methyl ethyl carbonate, and diethyl carbonate was used as a non-aqueous organic solvent and accounted for 83.5% of the total mass of the electrolyte, where the mass ratio of ethylene carbonate to methyl ethyl carbonate to diethyl carbonate was 3: 5: 2. Compound 6 was added and accounted for 0.5% of the total mass of the electrolyte. Triallyl phosphate and fluoroethylene carbonate were used as a second additive and accounted for 1.0% and 3.0% of the total mass of the electrolyte, respectively. A cathode material for the lithium secondary battery was LiCoO₂.

### Example 7

A lithium secondary battery was prepared by the method of Example 1 except that in an electrolyte of the lithium secondary battery, lithium hexafluorophosphate was used as a lithium salt and accounted for 17.5% of the total mass of the electrolyte, and a mixture of ethylene carbonate, methyl ethyl carbonate, and diethyl carbonate was used as a non-aqueous organic solvent and accounted for 78.0% of the total mass of the electrolyte, where the mass ratio of ethylene carbonate to methyl ethyl carbonate to diethyl carbonate was 3: 5: 2. Compound 7 was added and accounted for 4.0% of the total mass of the electrolyte. Lithium difluorophosphate was used as a second additive and accounted for 0.5% of the total mass of the electrolyte. A cathode material for the lithium secondary battery was LiMn₂O₄, and an anode material was lithium titanate.

### Example 8

A lithium secondary battery was prepared by the method of Example 1 except that a mixture of ethylene carbonate, methyl ethyl carbonate, and diethyl carbonate was used as a non-aqueous organic solvent and accounted for 83.5% of the total mass of the electrolyte, where the mass ratio of ethylene carbonate to methyl ethyl carbonate to diethyl carbonate was 3: 5: 2. Compound 8 was added and accounted for 1.0% of the total mass of the electrolyte. Triallyl isocyanurate and lithium difluorophosphate were used as a second additive and accounted for 0.5% and 3.0% of the total mass of the electrolyte, respectively. A cathode material for the lithium secondary battery was LiMnO₂.

### Example 9

A lithium secondary battery was prepared by the method of Example 1 except that in an electrolyte of the lithium secondary battery, lithium hexafluorophosphate was used as a lithium salt and accounted for 15% of the total mass of the electrolyte, and ethylene carbonate, propylene carbonate, and diethyl carbonate were used as a non-aqueous organic solvent and accounted for 77.5% of the total mass of the electrolyte, where the mass ratio of ethylene carbonate to propylene carbonate to diethyl carbonate was 4: 1: 5. Compound 9 was added and accounted for 5.0% of the total mass of the electrolyte. Vinylene carbonate and tripropynyl phosphate were used as a second additive and accounted for 0.5% and 2.0% of the total mass of the electrolyte, respectively. A cathode material for the lithium secondary battery was LiNi_{0.8}Co_{0.15}Al_{0.05}O₂, and an anode material was lithium titanate. The charge cut-off voltage for the lithium secondary battery was 2.7 V.

### Example 10

A lithium secondary battery was prepared by the method of Example 1 except that ethylene carbonate and methyl ethyl carbonate were used as a non-aqueous organic solvent and accounted for 83.0% of the total mass of the electrolyte, where the mass ratio of ethylene carbonate to methyl ethyl carbonate was 1: 3. Lithium trifluoromethanesulfonimide was used as a lithium salt. Compound 10 was added and accounted for 1.0% of the total mass of the electrolyte. Vinylene carbonate and fluoroethylene carbonate were used as a second additive and accounted for 0.5% and 3.0% of the total mass of the electrolyte, respectively. A cathode material for the lithium secondary battery was LiNi_{0.8}Co_{0.15}Al_{0.05}O₂.

### Example 11

A lithium secondary battery was prepared by the method of Example 1 except that ethylene carbonate and diethyl carbonate were used as a non-aqueous organic solvent and accounted for 84.0% of the total mass of the electrolyte, where the mass ratio of ethylene carbonate to diethyl carbonate was 1: 2. Lithium trifluorosulfonimide was used as a lithium salt. Compound 11 was added and accounted for 2.5% of the total mass of the electrolyte. Lithium difluoro oxalate borate and fluoroethylene carbonate were used as a second additive and accounted for 0.5% and 5.0% of the total mass of the electrolyte, respectively. A cathode material for the lithium secondary battery was LiCoO₂, and an anode material was a silicon-carbon composite.

### Example 12

A lithium secondary battery was prepared by the method of Example 1 except that in an electrolyte of the lithium secondary battery, lithium hexafluorophosphate was used as a lithium salt and accounted for 15% of the total mass of the electrolyte, and ethylene carbonate, propylene carbonate, and diethyl carbonate were used as a non-aqueous organic solvent and accounted for 81.5% of the total mass of the electrolyte, where the mass ratio of ethylene carbonate, propylene carbonate, to diethyl carbonate was 4: 1: 5. Compound 12 was added and accounted for 1.0% of the total mass of the electrolyte. Vinylene carbonate and tripropynyl phosphate were used as a second additive and accounted for 0.5% and 2.0% of the total mass of the electrolyte, respectively. A cathode material for the lithium secondary battery was LiNi_{0.8}Co_{0.15}Al_{0.05}O₂, and an anode material was lithium titanate. The charge cut-off voltage for the lithium secondary battery was 2.7 V.

### Example 13

A lithium secondary battery was prepared by the method of Example 1 except that a mixture of ethylene carbonate, methyl ethyl carbonate, and diethyl carbonate was used as a non-aqueous organic solvent and accounted for 83.5% of the total mass of the electrolyte, where the mass ratio of ethylene carbonate to methyl ethyl carbonate to diethyl carbonate was 3: 5: 2. Lithium trifluorosulfonimide was used as a lithium salt. Compound 13 was added and accounted for 0.5% of the total mass of the electrolyte. Triallyl phosphate and fluoroethylene carbonate were used as a second additive and accounted for 1.0% and 3.0% of the total mass of the electrolyte, respectively. A cathode material for the lithium secondary battery was LiCoO₂.

### Example 14

A lithium secondary battery was prepared by the method of Example 1 except that in an electrolyte of the lithium secondary battery, lithium hexafluorophosphate was used as a lithium salt and accounted for 17.5% of the total mass of the electrolyte, and a mixture of ethylene carbonate, methyl ethyl carbonate, and diethyl carbonate was used as a non-aqueous organic solvent and accounted for 78.0% of the total mass of the electrolyte, where the mass ratio of ethylene carbonate to methyl ethyl carbonate to diethyl carbonate was 3: 5: 2. Compound 14 was added and accounted for 4.0% of the total mass of the electrolyte. Lithium difluorophosphate was used as a second additive and accounted for 0.5% of the total mass of the electrolyte. A cathode material for the lithium secondary battery was LiMn₂O₄, and an anode material was lithium titanate.

### Example 15

A lithium secondary battery was prepared by the method of Example 2 except that no second additive was added.

### Comparative Example 1

A lithium secondary battery was prepared by the method of Example 1 except that Compound 1 was not added to an electrolyte of the lithium secondary battery.

### Comparative Example 2

A lithium secondary battery was prepared by the method of Example 2 except that Compound 2 was not added to an electrolyte of the lithium secondary battery.

### Comparative Example 3

A lithium secondary battery was prepared by the method of Example 3 except that Compound 3 was not added to an electrolyte of the lithium secondary battery.

### Comparative Example 4

A lithium secondary battery was prepared by the method of Example 4 except that Compound 4 was not added to an electrolyte of the lithium secondary battery.

### Comparative Example 5

A lithium secondary battery was prepared by the method of Example 5 except that Compound 5 was not added to an electrolyte of the lithium secondary battery.

### Comparative Example 6

A lithium secondary battery was prepared by the method of Example 6 except that Compound 6 was not added to an electrolyte of the lithium secondary battery.

### Comparative Example 7

A lithium secondary battery was prepared by the method of Example 7 except that Compound 7 was not added to an electrolyte of the lithium secondary battery.

### Comparative Example 8

A lithium secondary battery was prepared by the method of Example 8 except that Compound 8 was not added to an electrolyte of the lithium secondary battery.

### Comparative Example 9

A lithium secondary battery was prepared by the method of Example 9 except that Compound 9 was not added to an electrolyte of the lithium secondary battery.

### Comparative Example 10

A lithium secondary battery was prepared by the method of Example 10 except that Compound 10 was not added to an electrolyte of the lithium secondary battery.

### Comparative Example 11

A lithium secondary battery was prepared by the method of Example 11 except that Compound 11 was not added to an electrolyte of the lithium secondary battery.

### Comparative Example 12

A lithium secondary battery was prepared by the method of Example 12 except that Compound 12 was not added to an electrolyte of the lithium secondary battery.

### Comparative Example 13

A lithium secondary battery was prepared by the method of Example 13 except that Compound 13 was not added to an electrolyte of the lithium secondary battery.

### Comparative Example 14

A lithium secondary battery was prepared by the method of Example 14 except that Compound 14 was not added to an electrolyte of the lithium secondary battery.

Finally, the test process and test results of the lithium secondary batteries and electrolytes thereof according to the present disclosure are described.

The following experiments were conducted on each of the batteries obtained in Comparative Examples 1 to 14 and Examples 1 to 15:
Cycle experiment: the batteries obtained in Comparative Examples 1 to 14 and Examples 1 to 15 were tested separately at room temperature for internal resistance; the batteries were charged and discharged at 25 °C and a rate of 2CC/0.5CD, the batteries were charged and discharged at a low temperature of -10 °C and a rate of 0.5CC/0.2CD, and the batteries were charged and discharged at a high temperature of 55 °C and a rate of 0.5CC/0.5CD, so as to conduct charge-discharge cycle tests. Each discharge capacity at the last cycle recorded was divided by a discharge capacity at the first cycle to obtain a capacity retention. The results were reported in Table 1.

High-temperature storage experiment: the batteries in Comparative Examples 1 to 14 and Examples 1 to 15 were charged and discharged three times at room temperature and a charge/discharge rate of 0.5C/0.5C between 3.0 V to 4.2V and then charged at 0.5C to 4.2 V. A thickness of each battery was recorded. The batteries were stored in an oven of 60 °C for 15 days, and a thickness of each battery was recorded. The second battery thickness recorded divided by the first battery thickness recorded was a battery expansion rate. The results were reported in Table 1

**Table 1 Performance test table**

| | | | | | |
|---|---|---|---|---|---|
| | Internal Resistance (mΩ) | Capacity Retention at 50th Cycle at -10 °C | Capacity Retention at 500th Cycle at 25 °C | Capacity Retention at 500th Cycle at 45 °C | Battery Expansion Rate after High-temperature Storage |
| Example 1 | 18 | 81.7% | 95.7% | 87.1% | 2.1% |
| Example 2 | 16 | 82.3% | 91.2% | 82.8% | 2.7% |
| Example 3 | 15 | 79.5% | 90.4% | 83.6% | 3.3% |
| Example 4 | 16 | 81.9% | 87.8% | 81.2% | 5.7% |
| Example 5 | 17 | 83.7% | 97.9% | 92.4% | 3.6% |
| Example 6 | 14 | 79.9% | 93.7% | 88.1% | 3.4% |
| Example 7 | 18 | 80.3% | 93.6% | 86.1% | 3.5% |
| Example 8 | 16 | 82.7% | 96.7% | 88.7% | 3.3% |
| Example 9 | 16 | 83.7% | 94.5% | 86.7% | 3.1% |
| Example 10 | 15 | 83.7% | 93.45 | 87.4% | 3.1% |
| Example 11 | 16 | 82.7% | 94.7% | 86.3% | 3.0% |
| Example 12 | 16 | 85.4% | 95.6% | 84.3% | 2.9% |
| Example 13 | 15 | 86.7% | 96.5% | 86.5% | 3.3% |
| Example 14 | 16 | 82.4% | 95.7% | 83.7% | 3.2% |
| Example 15 | 17 | 81.5% | 91.2% | 80.8% | 3.4% |
| Comparative Example 1 | 24 | 68.4% | 83.3% | 75.3% | 7.8% |
| Comparative Example 2 | 24 | 65.7% | 75.2% | 63.8% | 15.7% |
| Comparative Example 3 | 25 | 64.3% | 76.5% | 70.4% | 18.7% |
| Comparative Example 4 | 26 | 63.4% | 71.3% | 60.8% | 27.6% |
| Comparative Example 5 | 23 | 68.5% | 83.7% | 74.2% | 16.5% |
| Comparative Example 6 | 25 | 69.3% | 78.6% | 72.1% | 17.1% |
| Comparative Example 7 | 26 | 66.4% | 83.1% | 79.3% | 15.5% |
| Comparative Example 8 | 25 | 62.7% | 80.7% | 68.9% | 20.7% |
| Comparative Example 9 | 24 | 63.7% | 81.2% | 67.4% | 18.9% |
| Comparative Example 10 | 26 | 62.5% | 81.7% | 68.4% | 17.5% |
| Comparative Example 11 | 27 | 63.4% | 80.6% | 67.9% | 14.5% |
| Comparative Example 12 | 26 | 62.8% | 83.5% | 66.8% | 15.2% |
| Comparative Example 13 | 27 | 64.5% | 83.5% | 68.9% | 16.3% |
| Comparative Example 14 | 28 | 63.9% | 82.4% | 69.0% | 15.7% |

Apparently, it can be seen from the above data that the sulfonimide compound can significantly reduce the internal resistance of the battery, and the cycles at a low temperature, the cycles at a high rate and a normal temperature, the cycles at a high temperature, and the expansion after high-temperature storage of the battery have been significantly improved. Examples 1 to 14 are significantly superior to their comparative examples. Meanwhile, the results of Example 15 show that without the second additive, the battery still has very low internal resistance, good cycles at a low temperature, cycles at a high rate and a normal temperature, and cycles at a high temperature, and the significantly inhibited expansion after high-temperature storage. Therefore, the battery prepared using the electrolyte of the present disclosure can obtain lower internal resistance, improved performances in low temperature cycling, high-rate normal temperature cycling and high temperature cycling, and lower expansion after high-temperature storage.

The preceding examples are merely illustrative and used to explain some features of the method of the present disclosure. The appended claims are intended to require a conceivable range as widely as possible, and the examples presented herein are merely the descriptions of embodiments selected according to all possible combinations of examples. Therefore, the applicant intends not to limit the appended claims by the selection of examples that illustrate the features of the present disclosure. Some numerical ranges used in the claims include sub-ranges thereof, and changes within these ranges should also be interpreted as being covered by the appended claims whenever possible.

## Claims

1. An electrolyte for a lithium secondary battery, comprising a non-aqueous organic solvent, a lithium salt, and an additive, wherein the additive comprises a sulfonimide compound.

2. The electrolyte for a lithium secondary battery according to claim 1, wherein the sulfonimide compound is selected from one or more compounds of Formula (1): 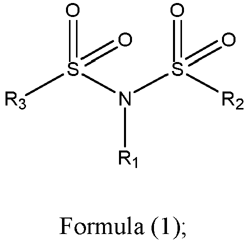 wherein R₁ is selected from one of fluorine, hydrogen, phenyl, fluorophenyl, pyridyl, hydrocarbyl, ether, fluorohydrocarbyl, phosphate, sulfonate, and silane.

3. The electrolyte for a lithium secondary battery according to claim 2, wherein R₁ is selected from one of methyl, ethyl, propyl, vinyl, and acryl.

4. The electrolyte for a lithium secondary battery according to claim 3, wherein R₂ and R₃ are independently selected from one or more of CF₃, F, phenyl, and fluorophenyl.

5. The electrolyte for a lithium secondary battery according to claim 4, wherein R₂ and R₃ are identical.

6. The electrolyte for a lithium secondary battery according to claim 1, wherein the sulfonimide compound accounts for 0.1% to 5% of a total mass of the electrolyte.

7. The electrolyte for a lithium secondary battery according to claim 1, wherein the additive further comprises a second additive that accounts for 0.01% to 10% of a total mass of the electrolyte.

8. The electrolyte for a lithium secondary battery according to claim 7, wherein the second additive is selected from one or more of vinylene carbonate, fluoroethylene carbonate, lithium difluorophosphate, lithium bis(oxalate)borate, lithium difluoro oxalate borate, 1,3-propane sultone, triallyl isocyanurate, methylene methanedisulfonate, vinyl sulfate, triallyl phosphate, and tripropynyl phosphate.

9. The electrolyte for a lithium secondary battery according to any one of claims 1 to 8, wherein the non-aqueous organic solvent comprises a cyclic ester and/or a chain ester and accounts for 67% to 91% of the total mass of the electrolyte.

10. The electrolyte for a lithium secondary battery according to claim 9, wherein the cyclic ester is selected from one or more of ethylene carbonate, propylene carbonate, 1,2-butanediol cyclic carbonate, 2,3-butanediol cyclic carbonate, γ-butyrolactone, and catechol carbonate.

11. The electrolyte for a lithium secondary battery according to claim 9, wherein the chain ester is selected from one or more of dimethyl carbonate, diethyl carbonate, carbonic acid diethyl ester, dipropyl carbonate, methyl ethyl carbonate, methyl propyl carbonate, ethyl propyl carbonate, methyl formate, ethyl formate, propyl formate, methyl acetate, ethyl acetate, propyl acetate, methyl propionate, ethyl propionate, propyl propionate, and 2,2-difluoroethyl acetate.

12. The electrolyte for a lithium secondary battery according to claim 1, wherein the lithium salt is selected from one or more of lithium hexafluorophosphate, lithium bis(fluorosulfonyl)imide, and lithium bis(trifluoromethanesulfonyl)imide.

13. The electrolyte for a lithium secondary battery according to claim 12, wherein the lithium salt accounts for 8% to 18% of a total mass of the electrolyte.

14. A lithium secondary battery, wherein an electrolyte for the lithium secondary battery is the electrolyte according to any one of claims 1 to 13, and the lithium secondary battery is one of a lithium ion battery, a lithium sulfur battery, or a lithium air battery.

15. The lithium secondary battery according to claim 14, wherein a cathode active material for the lithium secondary battery is a lithium-containing transition metal oxide and/or a lithium-containing transition metal phosphate compound.

16. The lithium secondary battery according to claim 15, wherein the cathode active material is selected from at least one of Li₁₊ₐ(NiₓCo_{y}M_{1-x-y})O₂, Li(NiₙMnₘCo₂₋ₙ₋ₘ)O₄, and LiMₚ(PO₄)_{q}, where 0 ≤ a ≤ 0.3, 0 ≤ x ≤ 1, 0 ≤ y ≤ 1, 0 ≤ x+y ≤ 1, 0 ≤ n ≤ 2, 0 ≤ m ≤ 2, 0 ≤ n+m ≤ 2, M is Al, Fe, Ni, Co, Mn, or V, 0 < p < 5, and 0 < q < 5.

17. The lithium secondary battery according to claim 14, wherein an anode active material for the lithium secondary battery is selected from at least one of lithium metal, lithium alloy, carbon material, and silicon or tin and an oxide thereof.
